# EUROPEAN PATENT SPECIFICATION

(11) **EP 4 110 993 B1**
(45) Date of publication and mention of the grant of the patent: **07.10.2026**
(21) Application number: 21760705.0
(22) Date of filing: 25.02.2021
(51) Int. Cl.: E01D 15/24, B64F 1/305, B63B 27/14

(54) **PASSENGER BRIDGE**
PASSAGIERBRÜCKE
PASSERELLE PASSAGERS

(30) Priority: 25.02.2020 SE 2050212
(43) Date of publication of application: 04.01.2023
(73) Proprietor: Fmt International Trade AB, 211 19 Mälmo (SE)
(72) Inventor: THELANDER, Per, 236 38 HÖLLVIKEN (SE)
(74) Representative: Leffers, Thomas
(86) International application number: PCT/SE2021/050156
(87) International publication number: WO 2021/173065

(56) References cited:
- CN-U- 202 202 251
- CN-U- 202 202 251
- CN-Y- 2 286 137
- CN-Y- 2 286 137
- JP-A- 2007 009 423
- JP-A- S63 125 706
- JP-A- S63 125 706
- US-A- 4 559 660
- US-A- 4 559 660
- US-A1- 2016 083 114
- US-A1- 2016 083 114
- US-B1- 6 668 411
- US-B1- 6 668 411

## Description

The present invention relates to a passenger bridge, for allowing passengers passage to or from an opening in a ship, an airplane or similar.

Such passenger bridges are well-known as such, and are disclosed for instance in US 8,484,786 B and US 8,505,140 B.

JP 2007 009423 A discloses a passenger bridge with different bridge segments.

In general, such passenger bridges are large and heavy structures, that have to not only operate reliably and for prolonged periods of time in outdoors environments with harsh weather conditions, but also to operate under rigorous safety regulations to provide full safety for passengers using the passenger bridges, even during emergency evacuations and the like. Therefore, such passenger bridges are built to be very sturdy.

At the same time, such bridges must be associated with certain flexibility, in order to be able to reach doors of various vessels. In particular, it is desired for a passenger bridge to be able to reach a door in a ship or similar across a relatively wide stretch of quay, since a ship may moor at different locations in relation to a passenger bridge, which is normally fixedly arranged at one end in relation to a passenger building or the like.

To achieve these objects, the above referenced passenger bridges, for instance, each comprises an outer, strong frame, supporting the whole bridge construction. Then, a bridge head of the bridge is allowed to move, within the frame, in a height direction in relation to the ground, while the whole frame is allowed to move on the ground in a horizontal direction.

There is, however, a general need for a passenger bridge providing even more bridge head positioning flexibility, being able to cater for a more diverse spectrum of vessel types without having to use different passenger bridges for different types of vessels to connect to.

The present invention solves the above described problems.

Hence, the invention relates to a passenger bridge, comprising a proximal end, comprising a passenger passage opening; a distal end, comprising a bridge head; several first bridge segments running along a first horizontal direction, a proximal one of which comprises, at the said proximal end, said passenger passage opening; several second segments, a distal one of which comprises, at said distal end, the bridge head; a first support structure, arranged to support said first and second bridge segments so that at least one of said first segments and at least one of said second segments can be individually tilted; whereby said first and second bridge segments together form a connected passage way for passengers between the proximal and distal ends, allowing the bridge head to move vertically in relation to the proximal end by said bridge segments tilting; wherein the length of the distal second bridge segment can be telescopably adjusted, thereby moving the bridge head horizontally in relation to the proximal end, wherein the passenger bridge further comprises a second support structure, supporting the distal end and being individually horizontally movable in relation to the first support structure, wherein the second support structure comprises a respective set of wheels for allowing the second support structure to move independently and horizontally on the ground, and wherein the first and second support structures engage each other in a horizontally slidable manner, characterised in that the second segments run along a second, opposite horizontal direction, adjacent to the first segments; and a distal one of said first bridge segments is connected to a proximal one of said second bridge segments, or alternatively that the distal one of the first segments is connected to a proximal one of a set of at least one third bridge segment arranged between said first segments and said second segments, forming said connected passage way; the first, second, third and any further sets of segments running in alternating opposite and parallel horizontal directions.

In the following, the invention will be described in detail, with reference to exemplifying embodiments of the invention and to the enclosed drawings, wherein:

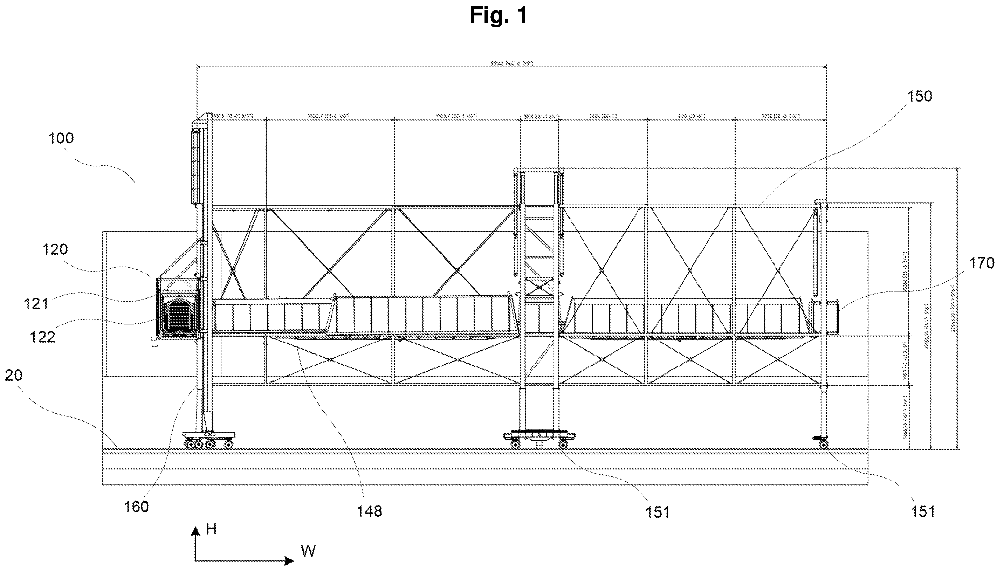

Figure 1 is a side view of a passenger bridge according to the present invention, with a bridge head in a first position;
Figure 2a is a first side view of the passenger bridge illustrated in Figure 1, seen along a width direction and with the bridge head in the first position;
Figure 2b is a second side view of the passenger bridge illustrated in Figure 1, seen along a width direction and with the bridge head in an upper position;
Figure 2c is a third side view of the passenger bridge illustrated in Figure 1, seen along a width direction and with the bridge head in a lower position;
Figure 3a is a fourth side view of the said passenger bridge, seen along a depth direction and with the bridge head in a lower extended position;
Figure 3b is a fifth side view of the said passenger bridge, seen along a depth direction and with the bridge head in an upper extended position;
Figure 3c is a sixth side view of the said passenger bridge, seen along a depth direction and with the bridge head in a lower retracted position;
Figure 3d is a seventh side view of the said passenger bridge, seen along a depth direction and with the bridge head in an upper retracted position; and

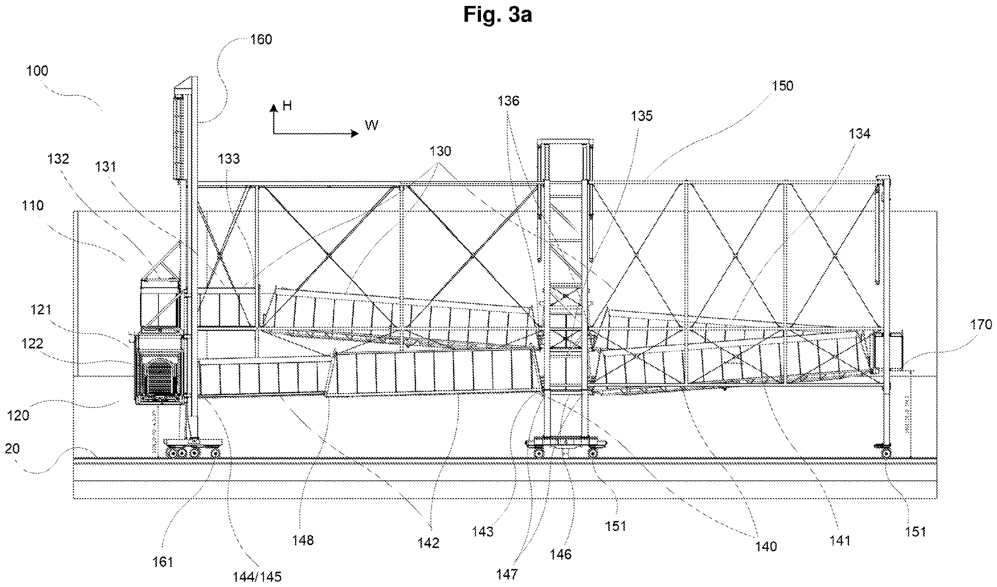

Figure 3a is a top view of the said passenger bridge, with the bridge head in an extended direction.

The Figures share the same reference numerals for the same parts.

Hence, in the Figures a passenger bridge 100 according to the present invention is illustrated. The passenger bridge 100, which may be a passenger bridge 100 for allowing walking passengers to embark or disembark a passenger ship (not shown in the Figures), an airplane or similar, comprises a proximal end 110, in turn comprising a passenger passage opening 111. The passenger passage opening 111 may be arranged to be connected to, or in fact be connected to, a corresponding door or opening in a passenger building 10, such as a ticket and waiting hall, or an airport gate building. Hence, passengers will be able to walk from the passenger building 10, via the passenger bridge 100, to and from a passenger ship, an airplane or similar. In the following, only the example of a passenger ship will be described, but it is realized that the corresponding description is valid in relation to an airplane and so forth. In case of airport use, the passenger bridge 100 is supported on the airport ground tarmac instead of a quay 20.

The passenger bridge 100 may be arranged for use on a quay 20, on which quay 20 the passenger building 10 may also be arranged. The quay 20, and also the passenger bridge 100 itself, is associated with a width direction W, a perpendicular depth direction D and a perpendicular height direction H. Passengers generally embark and disembark the passenger ship in the depth direction D.

Furthermore, the passenger bridge 100 comprises a distal end 120, in turn comprising a bridge head 121. Bridge heads are well-known as such, and typically comprise a means for the passengers to move to and from the ship 10 (see below), and may also comprise equipment arranged to be connected to the ship, such as electrical connections and similar.

According to the invention, the passenger bridge 100 further comprises first bridge segments 130. In the exemplifying passenger bridge 100 illustrated in the Figures, there are three first bridge segments 130. The first bridge segments 130 are preferably connected one to the next so as to form a connected corridor or tunnel for walking passengers, such as in the way illustrated in the Figures. A proximal one 131 of said first bridge segments 140 comprises, at the said proximal end 110 of the passenger bridge 100, said passenger passage opening 111.

In a corresponding manner, the passenger bridge 100 also comprises second segments 140. In the exemplifying passenger bridge 100, there are two second bridge segments 140. As is the case for the first bridge segments 130, the second bridge segments 140 are preferably connected one to the next so as to form a connected corridor for walking passengers, an example of which is illustrated in the Figures. A distal one 142 of said second bridge segments 140 comprises, at the said distal end 120 of the passenger bridge 100, the said bridge head 121.

As is illustrated in the Figures, the passenger bridge 100 may advantageously comprise at least two first bridge segments 130 and at least two second bridge segments 140.

Moreover, the passenger bridge 100 comprises a first support structure 150, arranged to support both said first 130 and second 140 bridge segments so that at least one, preferably at least two, such as all but possibly one, of said first segments 130 and at least one, preferably at least two, preferably all, of said second segments 140 can be individually tilted. The "tilting" of the first 130 and second 140 segments described herein is performed in a vertical plane, about a horizontal axis, such as about an axis parallel to the width W or, preferably, the depth D direction. Raising and lowering of such segments 130, 140 also takes place in the same respective vertical plane.

In the passenger bridge 100 according to the present invention, the said first 130 and second 140 bridge segments together form a connected passage way for said walking passengers between the proximal 110 and distal 120 ends, allowing the said bridge head 121 to move vertically, the height direction H, in relation the proximal end 110 (and hence the passenger building 10) by said tilting of the bridge segments 130, 140, and possibly also by raising and lowering as described below.

According to the invention, the length of the distal second bridge segment 142, as measured along a main longitudinal passenger walking direction of said bridge segment 142, can be telescopably adjusted, such as using a telescoping arrangement 148 through which the passengers can walk, thereby as a result of said telescoping action moving the bridge head 121 horizontally in relation to the proximal end 110, while maintaining a continuous walking path for passengers through the said distal segment 142. For instance, a proximal part 143 of the distal segment 142 may be horizontally fixed to a neighbouring second segment to which it is connected, while a distal part 144 of the distal segment 142 may be movable in relation to the proximal part 143 via said telescoping arrangement 148, while the distal part 144 is connected to, and may support, the bridge head 121, thereby also moving the bridge head 121 horizontally in relation to the proximal end 110.

Further according to the invention, the passenger bridge 100 comprises a second support structure 160, supporting the distal end 120 and being individually horizontally, such as along the width direction W, movable in relation to the first support structure 150.

The second support structure 160 may support the distal part 144 of the distal second segment 142, but may furthermore not support the proximal part 143 of the distal second segment 142. Instead, the proximal part 143 may be supported by the neighbouring second segment 140 and/or by the first support structure 150. Hence, the second support structure 160 may move horizontally with the telescoping action of the bridge head 121, while the first support structure 150 be stationary.

With such a passenger bridge 100, it is possible to achieve very good range both in the height direction H and in the width direction W, in relation to a passenger ship mooring at the quay 20. In particular, the second support structure 160, which is individually movable in relation to the first support structure 150, provides sufficient stability even for very large passenger bridges 100 and even for very large reach variability. This will be exemplified in the following.

The second support structure 160 comprises a set of wheels 161 for allowing the second support structure 160 to move independently horizontally along the ground. That the second support structure 160 is arranged to move "independently" horizontally is intended to mean that its horizontal movement, by the wheels 161 rolling on the ground, is independent in relation to the first support structure 150 within a certain horizontal movement interval, which may be at least 5 meters, preferably at least 10 meters, and possibly not more than 30 meters.

At any extent, both the first 150 and second 160 support structures may be arranged to support the respective segments and the bridge head 121 on the ground.

Furthermore, the first support structure 150 may also be arranged with wheels 151 allowing it to move horizontally on the ground. Such wheels 151 may allow the first support structure 150 to move in relation to the passenger building 10, such as during installation of the passenger bridge 100 at a particular passenger building 10. The wheels 151 of the first support structure 150 may support most, substantially the whole, or the whole, weight of the passenger bridge 100, in which case the movement of the wheels 151 implies movement of the whole passenger bridge 100. However, the independency of motion between the first 150 and second 160 support structures implies that the wheels 151 of the first support structure 150 may move horizontally without the second support structure 160 necessarily moving, at least along said horizontal freedom of motion interval.

As is illustrated in the Figures, the first segments 130 run along a first horizontal direction, while the second segments 140 run along a second, opposite horizontal direction, adjacent to the at least one first segments 130. Thus, the first segments 130 are arranged to run in parallel to the second segments 140 along said horizonal direction, which may be the width direction W. As above, the direction of each segment along which it "runs" refers to a main walking direction of passengers traversing the segment in question. It is realized that, as each segment may be tilted as described herein, such a horizontal direction may in fact be a non-horizontal direction but a direction having a horizontal component, or be a horizontal direction of a ground projection of the segment in question. It is this horizontal direction to which the said parallel arrangement refers.

Furthermore, the passenger bridge 100 may comprise a horizontal platform 170 connecting, for the purpose of allowing walking passengers to pass, a distal one 134 of said at least one first bridge segments 130 to a proximal one 141 of said at least one second bridge segments 140, allowing passengers to pass from the connected tunnel formed by the interconnected first segments 130 to the connected tunnel formed by the interconnected second segments 140. Alternatively, the passenger bridge 100 may comprise three or more sets of such interconnected segments (not shown in the Figures). In this case, such sets of segments run in alternating opposite and parallel horizontal directions, allowing even further bridge head 121 positioning freedom in relation to a passenger ship. Then, the horizontal platform 170 may be arranged to connect the distal segment 134 in question to a proximal one of a set of at least one third bridge segments (not shown in the Figures) that may be arranged between said at least one first segments 130 and said at least one second segments 140, forming said connected passage way. In this case, there may also be more than one such horizontal platforms, such as one between each such connected set of segments.

The horizontal platform 170 may be arranged to be raised and lowered in said first support structure 150, either as a result of the horizontal platform 170 being passively supported by the respective connected segments 134, 141 and possibly also, by sliding arrangement, the first support structure 150, or via active control using a control unit of the below described type.

It is realized that the segments 134, 141 may be connected in other ways than the horizontal platform 170 illustrated in the Figures, such as via a direct connection door between the segments 134, 141 in question. This also applies to the case in which there are more than two sets of segments 130, 140.

As illustrated in the Figures, the passenger passage opening 111, or more precisely the main direction of motion of passengers moving through the passenger passage opening 111 to and from the passenger bridge 100, is arranged substantially perpendicularly to the said proximal one 131 of said first segments 130, or more precisely to a horizontal component or ground projection of a main longitudinal direction of the said proximal segment 131. Hence, the proximal segment 131 may comprise the passenger passage opening 111 as a sideways oriented opening near its proximal end 132. The passenger passage opening 111 may be arranged directed in the depth direction D.

Furthermore, the bridge head 120, or more precisely a main embarking/disembarking direction of walking passengers through the bridge head 120 to and from a passenger ship, may be arranged substantially perpendicularly to the said distal one 142 of said second segments 140, or more precisely to a horizontal component or ground projection of a main longitudinal direction of the said distal segment 142. The said embarking/disembarking direction may be arranged in parallel, or substantially in parallel, to the said passenger passage opening 111 direction, and in particular arranged to be parallel to the depth direction D.

In the above described case with connected sets of segments 130, 140, and where at least the second support structure 160 is supported on wheels, the first 150 and second 160 support structures engage each other in a horizontally slidable manner. This may imply that the second support structure 160 is horizontally slidable in relation to the first support structure 150, which in turn may be stationary once installed at the correct position in relation to the passenger building 10. The slidable engagement may comprise metal guides arranged to guide the wheels 161 of the second support structure 160 or any other part of the second support structure 160 arranged near a bottom (in the height direction H) of the second support structure 160. Furthermore, the slidable engagement may also comprise guides acting on an upper (in the height direction) part of the second support structure, such as in combination with guides acting on the said lower part forming a lower engagement point. The upper engagement point is preferably arranged, in the height direction H, at least as high as the bridge head 121. This provides a very robust construction, in particular in case the bridge head 121 is telescopable and/or extends in the depth direction D externally to the second support structure 160.

Namely, as is illustrated in the Figures, the bridge head 121 may be arranged at least to a part, such as at least to 50%, externally to the second support structure 160 in the horizontal plane. In particular, the bridge head 121 may protrude externally to a ground projection of the second support structure 160, in the depth direction D away from the proximal end 110 and towards a passenger ship to which the passenger bridge 100 is, or is to be, connected. The depth direction D protrusion may, in this case, be at least 50% of the total depth direction D length of the bridge head 121. Preferably, the bridge head 121 may extend at least 4, preferably at least 8, meters out from said second support structure, including said cabin 122.

In particular, the bridge head 121 may be arranged to be telescopably lengthened and shortened, in the horizontal plane, along its longitudinal direction. This telescopable lengthening and shortening is preferably in the same direction, such as the depth direction D, as the said external protrusion direction. More particularly, the said at least 50% external protrusion of the bridge head 121 in relation to the second support structure 160 may be in a fully telescopably lengthened state of the bridge head 121.

In some embodiments, the bridge head 121 comprises a cabin 122 for embarking and disembarking passengers to and from the passenger ship, and which cabin 122 may be conventional as such. The cabin 122 can be turned in the horizontal plane in relation to a vertical axis running through the bridge head 121, yielding further mooring and passenger bridge 100 positioning flexibility. The cabin 122 in turn comprises a cabin door 123, through which passengers can move and thereby to embark/disembark. Preferably, the cabin 122 further comprises a gangway arranged to engage with the door of a passenger ship in a depth direction D slidable engagement. It is preferred that the passenger bridge 100 as a whole, and in particular the bridge head 121 and the cabin 122, is not arranged to actively adjust the depth direction D position of the cabin or a gangway in relation to the short-term movements of a moored passenger ship due to water movements. The passenger bridge 100 structure described herein will provide adequate performance in the less complicated (and therefore desired) case with a passive, slidable engagement between a gangway and a passenger ship door.

Regarding the said sets of first 130 and second 140 bridge segments, and possibly also for any additional third, fourth, and so on, sets of segments (as discussed above), for each such bridge segment within such a set 130, 140 the segments in question may be connected one to the other via a respective horizontal platform 135 (first set 130), 146 (second set 140). Each such horizontal platform 135, 146 may then be arranged to be raised and lowered in relation to the first support structure 150, possibly by passively following the height direction H movements of the connected bridge segments in question, such as via a suitable link arm system connected to the respective segments in turn being connected by the horizontal platform in question, or via active pivot angle control in relation to the connected bridge segments in question. Namely, each respective bridge segment in said set 130, 140 in question may be pivotally connected to each respective horizontal platform 135, 146, which pivotal connection may then be arranged so that each horizontal platform 135, 146 is maintained horizontal while the respective connected bridge segment is lowered, raised and tilted, as the case may be. In case the control is active, it may be performed based upon a sensed tilting angle of the horizontal platform 135, 146 in question, which may be used in a feedback control loop with the aim of maintaining a horizontal orientation of the platform 135, 146 in question.

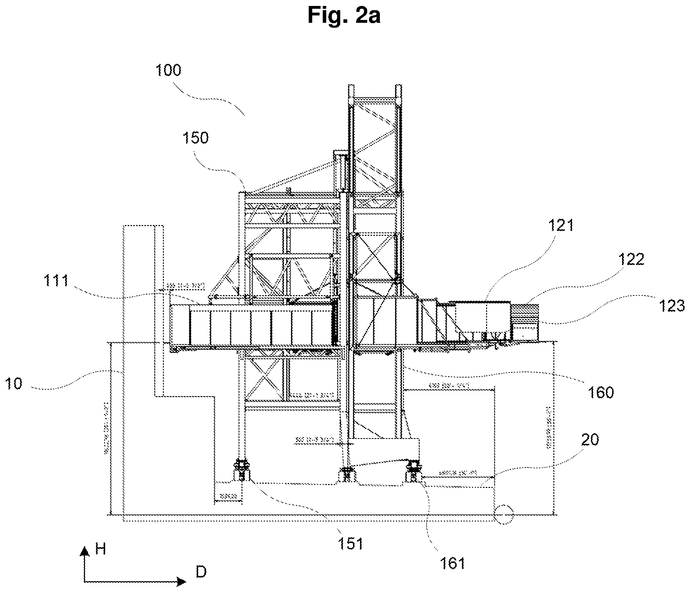

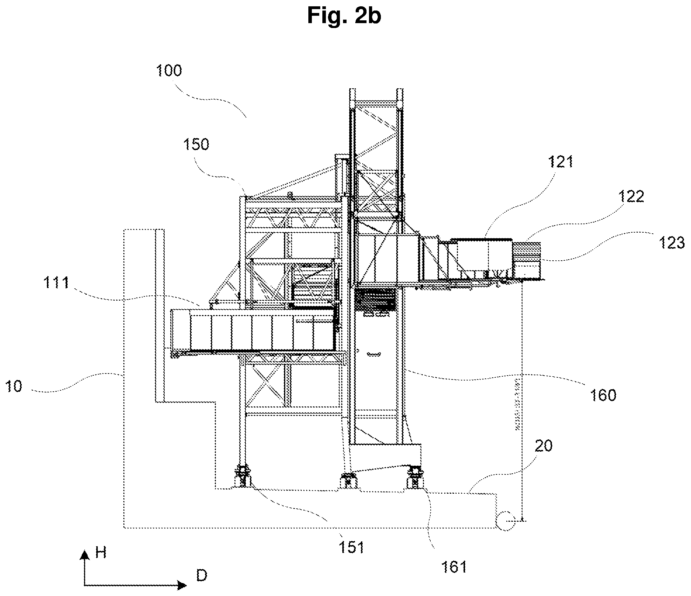

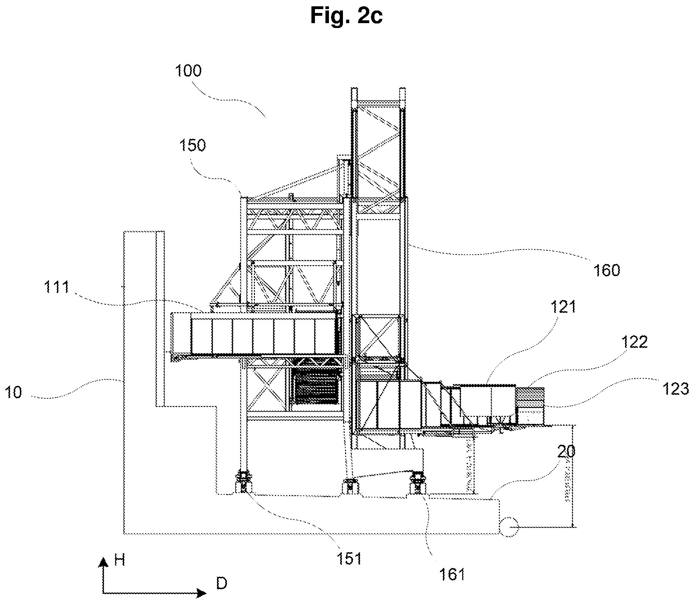

As is illustrated in the Figures, the bridge head 121 may preferably be arranged to be vertically (in the height direction H) adjusted, by tilting the first 130 and/or second 140 segments, which tilting may be independent between differing such segments. The bridge head 121 may hence be vertically adjusted between a highest position (illustrated in Figure 2b) and 2a lowest position (illustrated in Figure 2c). The lowest and highest positions for the bridge head 121 may be arranged in relation to the passenger passage opening 111 of the above mentioned proximal end 110 of the passenger bridge 100 so that the said passenger passage opening 111 is vertically (height direction H) arranged between the said highest and said lowest position for the bridge head 121. The passenger passage opening 111 is then arranged at a suitable height H for connecting to a passenger building opening.

In particular, the cabin door 123 may be adjustable this way to a lowest position, in which the cabin door 123 is arranged at a lower height H than the passenger passage opening 111, and to a highest position, in which the cabin door 123 is arranged at a higher height H than the passenger passage opening 111. Due to the possibility of tilting the segments 130, 140, the bridge head 121 may be movable across a continuous height direction H interval between said highest and said lowest position.

In particular, in some embodiments, at least one, preferably all but the proximal one 131, of said first segments 130 and at least one, preferably all, of said second segments 140 may be individually tilted, and/or individually raised and lowered, in the first support structure 150.

That a segment is "individually" tilted, raised or lowered means that it can be tilted, raised or lowered, respectively, without imparting any tilt, raising or lowering to any other segments, apart from the necessary movements of neighbouring segments resulting from the movement of one or both ends of the segment in question which is tilted, raised or lowered. Hence, apart from the fact that the segments are connected so as to provide a connected walking tunnel for passengers, every segment may be individually controllable in terms of tilting, lower and raising. While imparting such tilting, raising and/or lowering, each segment is preferably individually supported by the first support structure 150, via a suitable vertically (in the height direction H) controlled and slidable supporting engagement between the segment in question and the first support structure 150.

In a preferred embodiment, the proximal first segment 131 is horizontally arranged.

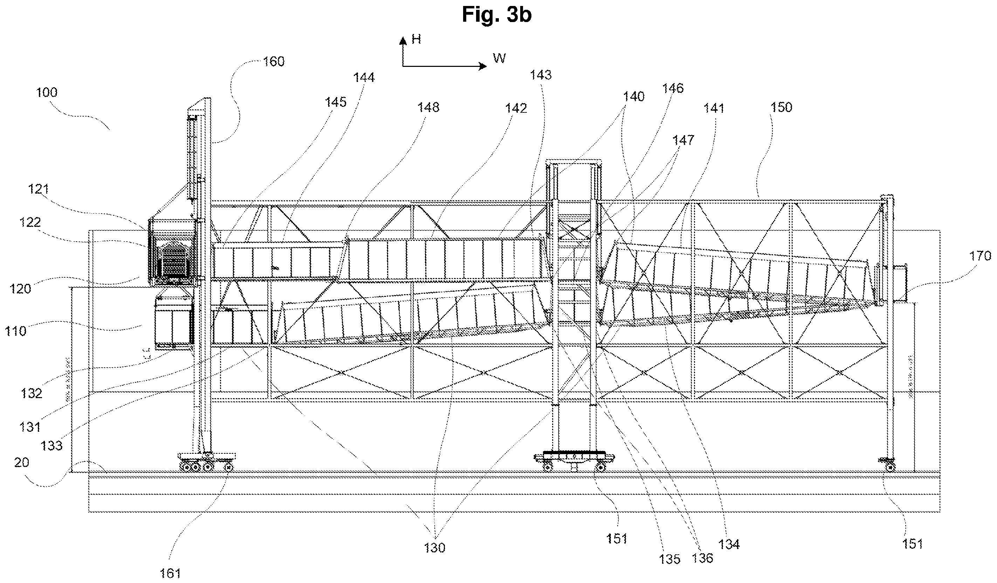

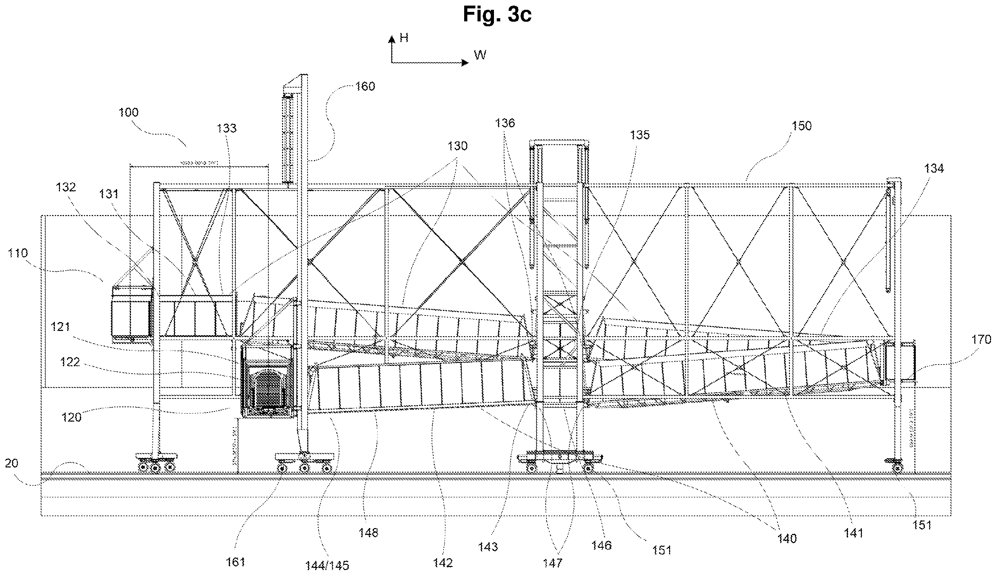

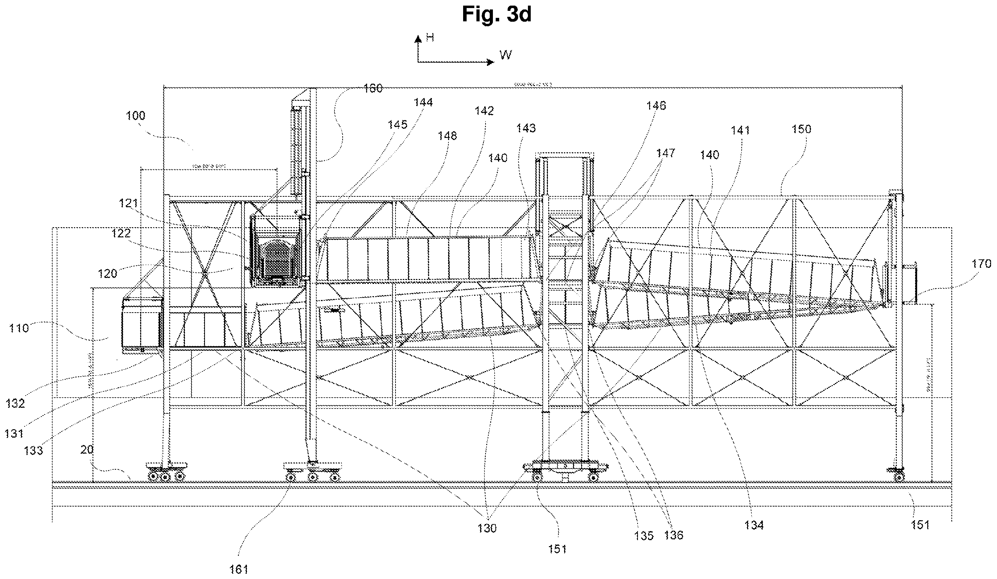

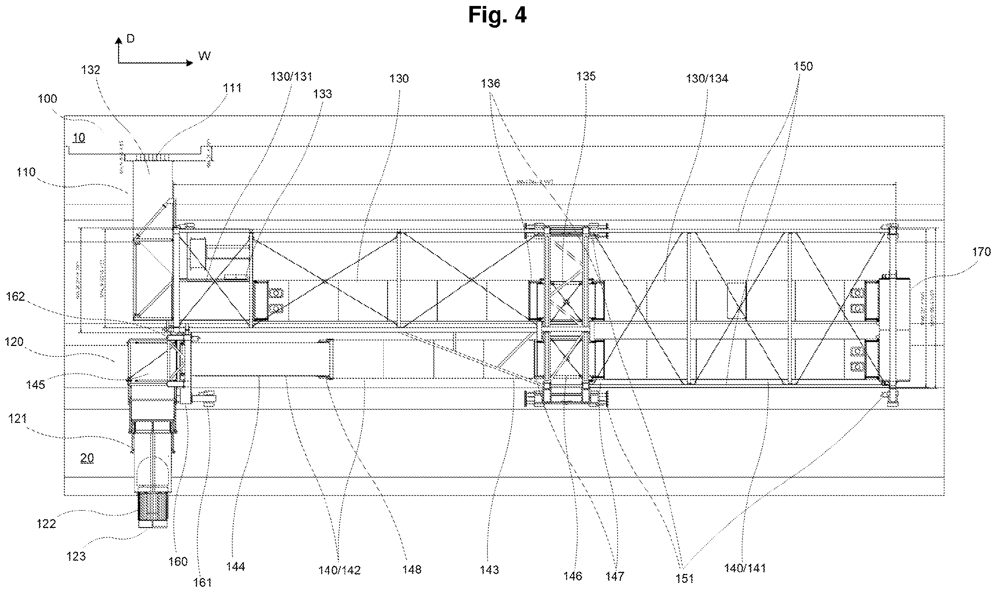

Moreover, the bridge head 121 may advantageously be horizontally adjustable, such as in the width direction W, between a first, extended, extreme position (shown in Figures 3a and 3b) and a second, retracted, extreme position (shown in Figures 3c and 3d), using said telescopable arrangement of the distal second bridge segment 142. Advantageously, such horizontal adjustment can be made horizontally, and preferably continuously, at least between width direction W position of a proximal end 132 and a width direction W position of a distal end 133 of the said proximal first segment 131. In particular, the first and second horizontal extreme positions of the bridge head 121 may be arranged so that the cabin door 123 moves between the said proximal 132 and distal 133 ends of the proximal segment 131 in the width direction W.

Each of the above described controls of the tilt and height direction H position of individual segments 130, 140; the tilt of horizontal platforms 135, 146, 170; the telescoping action of the distal segment 142; and the telescoping action of the bridge head 121 may independently be imparted in each case by a central control unit (now shown in the Figures). Such control is preferably performed using electric motors or, more preferably, hydraulic control using a centrally located hydraulic pressure device and a hydraulic pipe work arranged to transfer the hydraulic force from the centrally located hydraulic pressure device to each local control action point. The control may be based upon measured positions and tilts, provided by locally arranged measurement devices arranged to provide measurement information to the control using. The control unit may also comprise a computer device arranged to perform an automatic, feedback loop based control, and possibly also a supervision function that may also be based upon received measurement data of the said type.

In general, the width direction W slidable engagement between the first 150 and second 160 support structures, in combination with the width direction W telecopability of the distal segment 142; the height direction H adjustability of the first 130 and second 140 sets of segments; and the depth direction D telescopability of the bridge head 121, provides a very wide reach in all directions W, H, D, while still achieving a very robust and sturdy construction for use for prolonged time periods under very harsh environmental conditions.

In particular, the slidabale engagement between the first 150 and second 160 support structures involves no or only minimal play in the depth direction D, and in particular comprises means for preventing the second support structure 160 to pivot, about an axis parallel to the width direction W, in relation to the first support structure 150, and in particular to prevent the bridge head 121 to "fall out" towards the passenger ship in the depth direction D. Such means may, for instance, be said upper slidable engagement point.

The said proximal first segment 131 may be non-tiltable, non-raisable and non-lowerable, as is best illustrated in Figures 3a-3d.

Both the first 150 and second 160 support structures may be designed as a respective steel framework, and in particular the first support structure 150 may generally comprise a respective support corridor for each of said sets 130, 140 of segments, along which support corridor the respective segments 130; 140 are arranged to run and be supported in a way permitting them to be individually tilted, raised and lowered as described above.

The longitudinal length of each tiltable segment may be at least 10 meter, and at the most 25 meters.

Above, preferred embodiments have been described. However, it is apparent to the skilled person that many modifications can be made to the disclosed embodiments without departing from the scope of the invention, as defined by the enclosed claims.

For instance, as mentioned above more than two sets 130, 140 of segments can be used, in order to increase height direction H reach for the passenger bridge 100. In this case, the first support structure 150 may comprise one support corridor of the said type for each one of said sets of segments.

Furthermore, selectively activatable passenger shortcut openings may be arranged along the connected passenger tunnel formed by the segments 130, 140, such as between the proximal end 132 of the proximal first segment 131 and the distal end 145 of the distal second segment 142; or, in the case of more than two sets of segments 130, 140, between a proximal segment of such a set and a distal segment of a subsequent set, arranged to selectively shortcut a pair of such sets of segments.

The passenger bridge 100 may, of course, also comprise additional parts, in addition to those shown in the Figures, such as an additional bridge head arranged at the proximal second segment 141 and arranged for selective activation when width direction W reach is desired to be very wide.

Hence, the invention is not limited to the described embodiments, but can be varied within the scope of the enclosed claims.

## Claims

1. Passenger bridge (100), comprising
a proximal end (110), comprising a passenger passage opening (111);
a distal end (120), comprising a bridge head (121);
several first bridge segments (130) running along a first horizontal direction, a proximal one (131) of which comprises, at the said proximal end (110), said passenger passage opening (111);
several second segments (140), a distal one (142) of which comprises, at said distal end (120), the bridge head (121);
a first support structure (150), arranged to support said first (130) and second (140) bridge segments so that at least one of said first segments (130) and at least one of said second segments (140) can be individually tilted; whereby said first (130) and second (140) bridge segments together form a connected passage way for passengers between the proximal (110) and distal (120) ends, allowing the bridge head (121) to move vertically in relation to the proximal end (110) by said bridge segments (130,140) tilting;
wherein the length of the distal second bridge segment (142) can be telescopably adjusted, thereby moving the bridge head (121) horizontally in relation to the proximal end (110), wherein the passenger bridge (100) further comprises a second support structure (160), supporting the distal end (120) and being individually horizontally movable in relation to the first support structure (150), wherein the second support structure (160) comprises a respective set of wheels (161) for allowing the second support structure to move independently and horizontally on the ground,
wherein the first (150) and second (160) support structures engage each other in a horizontally slidable manner, **characterised in that** the second segments (140) run along a second, opposite horizontal direction, adjacent to the first segments (130); and a distal one (134) of said first bridge segments (130) is connected to a proximal one (141) of said second bridge segments (140), or alternatively that
the distal one (134) of the first segments (130) is connected to a proximal one of a set of at least one third bridge segment arranged between said first segments (130) and said second segments (140), forming said connected passage way; the first, second, third and any further sets of segments (130,140) running in alternating opposite and parallel horizontal directions.

2. Passenger bridge (100) according to claim 1, **characterised in that** the first support structure (150) also comprises a respective set of wheels (151,161) for allowing the respective support structure (150,160) to move independently and horizontally on the ground.

3. Passenger bridge (100) according to claim 1 or 2, **characterised in that** said connection, forming said connected passage way, is achieved by a horizontal set platform (170) comprised in the passenger bridge (100).

4. Passenger bridge (100) according to claim 3, **characterised in that** the horizontal set platform (170) is arranged to be raised and lowered in said first support structure (150).

5. Passenger bridge (100) according to any one of the preceding claims, **characterised in that** the passage opening (111) is arranged substantially perpendicularly to said proximal one (131) of said first segments (130).

6. Passenger bridge (100) according to any one of the preceding claims, **characterised in that** the bridge head (121) is arranged substantially perpendicularly to said distal one (142) of said second segments (140).

7. Passenger bridge (100) according to any one of the preceding claims, **characterised in that** the bridge head (121) comprises a cabin (122), which can be turned in the horizontal plane in relation to a vertical axis running through the bridge head (121).

8. Passenger bridge (100) according to any one of the preceding claims, **characterised in that** at least one of said first bridge segments (130) is connected to another one of said first bridge segments (130) via a respective first horizontal segment platform (135), each such first horizontal segment platform (135) being raisable and lowerable in the first support structure (150), **in that** each respective first bridge segment (130) is pivotally connected to each respective first horizontal segment platform (135), the pivotal connection being arranged so that each first horizontal segment platform (135) is maintained horizontal while the respective first bridge segment (130) is lowered, raised and/or tilted.

9. Passenger bridge (100) according to any one of the preceding claims, **characterised in that** at least one of said second bridge segments (140) is connected to another one of said second bridge segments (140) via a respective second horizontal segment platform (146), each such second horizontal segment platform (146) being raisable and lowerable in the first support structure (150), **in that** each respective second bridge segment (140) is pivotally connected to each respective second horizontal segment platform (146), the pivotal connection being arranged so that each second horizontal segment platform (146) is maintained horizontal while the respective second bridge segment (140) is lowered, raised and/or tilted.

10. Passenger bridge (100) according to any one of the preceding claims, **characterised in that** the bridge head (121) can be vertically adjusted, by tilting the first (130) and/or second (140) segments, between a highest and a lowest position, and **in that** the passenger passage opening (111) is vertically arranged between the highest and the lowest position.

11. Passenger bridge (100) according to any one of the preceding claims, **characterised in that** the proximal first segment (131) is horizontally arranged, **in that** the bridge head (121) can be horizontally adjusted between a first and a second extreme position, using said telescopable arrangement, and **in that** such horizontal adjustment can be made horizontally between a proximal (132) and a distal (133) end of the said proximal first segment (131).

12. Passenger bridge (100) according to any one of the preceding claims, **characterised in that** the bridge head (121) is arranged at least to a part, such as at least to 50%, externally to the second support structure (160) in the horizontal plane.

13. Passenger bridge (100) according to any one of the preceding claims, **characterised in that** the bridge head (121) is arranged to be telescopably lengthened and shortened, in the horizontal plane, along its longitudinal direction.

## Patentansprüche

1. Passagierbrücke (100), umfassend
ein proximales Ende (110), das eine Passagierdurchgangsöffnung (111) aufweist;
ein distales Ende (120), das einen Brückenkopf (121) aufweist;
mehrere erste Brückensegmente (130), die entlang einer ersten horizontalen Richtung verlaufen, von denen ein proximales Segment (131) an dem proximalen Ende (110) die Passagierdurchgangsöffnung (111) aufweist;
mehrere zweite Segmente (140), von denen ein distales Segment (142) am distalen Ende (120) den Brückenkopf (121) aufweist;
eine erste Stützstruktur (150), die so angeordnet ist, dass sie die ersten (130) und zweiten (140) Brückensegmente derart stützt, dass mindestens eines der ersten Segmente (130) und mindestens eines der zweiten Segmente (140) einzeln geneigt werden können;
wobei die ersten (130) und zweiten (140) Brückensegmente zusammen einen verbundenen Durchgang für Passagiere zwischen dem proximalen (110) und dem distalen (120) Ende bilden, wodurch der Brückenkopf (121) sich in Bezug auf das proximale Ende (110) durch die Neigung der Brückensegmente (130, 140) vertikal bewegen kann;
wobei die Länge des distalen zweiten Brückensegments (142) teleskopartig verstellbar ist, wodurch der Brückenkopf (121) horizontal in Bezug auf das proximale Ende (110) verschoben werden kann,
wobei die Passagierbrücke (100) ferner eine zweite Stützstruktur (160) umfasst, die das distale Ende (120) stützt und unabhängig in Bezug auf der ersten Stützstruktur (150) horizontal bewegbar ist, wobei die zweite Stützstruktur (160) einen entsprechenden Satz Räder (161) umfasst, um die zweite Stützstruktur (160) unabhängig und horizontal auf dem Boden zu bewegen, und wobei die erste (150) und die zweite (160) Stützstruktur in horizontal verschiebbarer Weise an einander angreifen, **dadurch gekennzeichnet, dass** die zweiten Segmente (140) entlang einer zweiten, entgegengesetzten horizontalen Richtung neben den ersten Segmenten (130) verlaufen; und ein distales Segment (134) der ersten Brückensegmente (130) mit einem proximalen Segment (141) der zweiten Brückensegmente (140} verbunden ist, oder alternativ, dass
das distale Segment (134) der ersten Segmente (130) mit einem proximalen Segment eines Satzes von mindestens einem dritten Brückensegment verbunden ist, das zwischen den ersten Segmenten (130) und den zweiten Segmenten (140) angeordnet ist und den verbundenen Durchgang bildet;
wobei der erste, zweite, dritte und alle weiteren Sätze von Segmenten (130, 140) abwechselnd in entgegengesetzten und parallelen horizontalen Richtungen verlaufen.

2. Passagierbrücke (100) nach Anspruch 1, **dadurch gekennzeichnet, dass** die erste Stützstruktur (150) auch einen entsprechenden Satz Räder (151, 161) aufweist, so dass die jeweilige Stützstruktur (150, 160) unabhängig und horizontal auf dem Boden bewegt werden kann.

3. Passagierbrücke (100) nach Anspruch 1 oder 2, **dadurch gekennzeichnet, dass** die Passagierbrücke (100) eine horizontale Einstellplattform (170) aufweist, um die Verbindung, welche den verbundenen Durchgang bildet, zu erhalten.

4. Passagierbrücke {100) nach Anspruch 3, **dadurch gekennzeichnet, dass** die horizontale Einstellplattform (170) derart angeordnet ist, dass sie in der ersten Tragkonstruktion (150) angehoben und abgesenkt werden kann.

5. Passagierbrücke (100) nach einem der vorstehenden Ansprüche, **dadurch gekennzeichnet, dass** die Durchgangsöffnung (111) im Wesentlichen senkrecht zu dem proximalen Segment (131) der ersten Segmente (130) angeordnet ist.

6. Passagierbrücke {100) nach einem der vorstehenden Ansprüche, **dadurch gekennzeichnet, dass** der Brückenkopf (121) im Wesentlichen senkrecht zu dem distalen Segment (142) der zweiten Segmente (140) angeordnet ist.

7. Passagierbrücke {100) nach einem der vorstehenden Ansprüche, **dadurch gekennzeichnet, dass** der Brückenkopf (121) eine Kabine (122) aufweist, die in der horizontalen Ebene in Bezug auf eine vertikale Achse, die durch den Brückenkopf (121) verläuft, gedreht werden kann.

8. Passagierbrücke {100) nach einem der vorstehenden Ansprüche, **dadurch gekennzeichnet, dass** mindestens eines der ersten Brückensegmente (130) über eine entsprechende erste horizontale Segmentplattform (135) mit einem anderen der ersten Brückensegmente (130) verbunden ist, wobei jede solche erste horizontale Segmentplattform (135) in der ersten Stützstruktur (150) anhebbar und absenkbar ist, wobei jedes entsprechende erste Brückensegment {130) schwenkbar mit jeder entsprechenden ersten horizontalen Segmentplattform (135) verbunden ist, wobei die schwenkbare Verbindung so angeordnet ist, dass jede erste horizontale Segmentplattform (135) horizontal gehalten wird, während das jeweilige erste Brückensegment (130) abgesenkt, angehoben und/oder gekippt wird.

9. Passagierbrücke (100) nach einem der vorstehenden Ansprüche, **dadurch gekennzeichnet, dass** mindestens eines der zweiten Brückensegmente (140) über eine entsprechende zweite horizontale Segmentplattform (146) mit einem anderen der zweiten Brückensegmente (140) verbunden ist, wobei jede solche zweite horizontale Segmentplattform (146) in der ersten Tragkonstruktion (150) anhebbar und absenkbar ist, wobei jedes entsprechende zweite Brückensegment (140) schwenkbar mit jeder entsprechenden zweiten horizontalen Segmentplattform (146) verbunden ist, wobei die schwenkbare Verbindung so angeordnet ist, dass jede erste horizontale Segmentplattform (146) horizontal gehalten wird, während das jeweilige erste Brückensegment (140) abgesenkt, angehoben und/oder gekippt wird.

10. Passagierbrücke (100) nach einem der vorstehenden Ansprüche, **dadurch gekennzeichnet, dass** der Brückenkopf (121) durch Kippen des ersten (130) und/oder zweiten (140) Segments zwischen einer höchsten und einer niedrigsten Position vertikal verstellbar ist und dass die Passagierdurchgangsöffnung (111) vertikal zwischen der höchsten und der niedrigsten Position angeordnet ist.

11. Passagierbrücke {100) nach einem der vorstehenden Ansprüche, **dadurch gekennzeichnet, dass** das proximale erste Segment (131) horizontal angeordnet ist, dass der Brückenkopf (121) durch den teleskopartigen Aufbau zwischen einer ersten und einer zweiten Endstellung horizontal verstellbar ist und dadurch, dass diese horizontale Verstellung horizontal zwischen einem proximalen (132) und einem distalen (133) Ende des proximalen ersten Segments (131) erfolgen kann.

12. Passagierbrücke {100) nach einem der vorstehenden Ansprüche, **dadurch gekennzeichnet, dass** der Brückenkopf (121) zumindest teilweise, beispielsweise zu mindestens 50 %, außerhalb der zweiten Tragkonstruktion (160) in der horizontalen Ebene angeordnet ist.

13. Passagierbrücke {100) nach einem der vorstehenden Ansprüche, **dadurch gekennzeichnet, dass** der Brückenkopf (121) so angeordnet ist, dass dieser in der horizontalen Ebene entlang seiner Längsrichtung teleskopartig verlängert und verkürzt werden kann.

## Revendications

1. Passerelle pour passagers (100) comprenant
une extrémité proximale (110) qui présente une ouverture de passage pour passagers (111) ;
une extrémité distale (120) qui présente une tête de passerelle (121) ; plusieurs premiers segments de passerelle (130) qui s'étendent le long d'une première direction horizontale, parmi lesquels un segment proximal (131) présente, à l'extrémité proximale (110) qui présente l'ouverture de passage pour passagers (111);
plusieurs seconds segments (140) dont un segment distal (142) à l'extrémité distale (120) présente la tête de passerelle (121) ;
une première structure de support (150) disposée de manière à supporter les premiers (130) et seconds (140) segments de passerelle de telle sorte qu'au moins l'un des premiers segments (130) et au moins l'un des seconds segments (140) puissent être inclinés individuellement ;
les premier (130) et deuxième (140) segments de passerelle formant ensemble un passage relié pour les passagers entre l'extrémité proximale (110) et l'extrémité distale (120), la tête de passerelle (121) pouvant se déplacer verticalement par rapport à l'extrémité proximale (110) grâce à l'inclinaison des segments de passerelle (130, 140) ;
la longueur du deuxième segment de passerelle distal (142) étant réglable de manière télescopique, ce qui permet à la tête de passerelle (121) d'être déplacée horizontalement par rapport à l'extrémité proximale (110),
la passerelle (100) comprenant en outre une deuxième structure de support (160) qui supporte l'extrémité distale (120) et qui est mobile horizontalement de manière indépendante par rapport à
la première structure de support (150), la
la deuxième structure de support (160) comprend un ensemble correspondant de roues (161) pour déplacer la deuxième structure de support (160) de manière indépendante et horizontale sur le sol, et dans lequel les première (150) et deuxième (160) structures de support s'engagent l'une avec l'autre de manière déplaçable horizontalement, **caractérisé en ce que** les seconds segments (140) s'étendent le long d'une seconde direction horizontale opposée à côté des premiers segments (130) ; et un segment distal (134) des premiers segments de pont (130) est relié à un segment proximal (141) des seconds segments de pont (140), ou bien
le segment distal (134) des premiers segments (130) est relié à un segment proximal d'un ensemble d'au moins un troisième segment de pont, qui est disposé entre les premiers segments (130) et les seconds segments (140) et forme le passage relié ; les premier, deuxième, troisième et tous les autres ensembles de segments (130, 140) s'étendent alternativement dans des directions horizontales opposées et parallèles.

2. Passerelle pour passagers (100) selon la revendication 1, **caractérisée en ce que** la première structure de support (150) comprend également un ensemble correspondant de roues (151, 161) de telle sorte que les structures de support respectives (150, 160) peuvent être déplacées indépendamment et horizontalement sur le sol.

3. Passerelle pour passagers (100) selon la revendication 1 ou 2, **caractérisée en ce que** la passerelle pour passagers (100) comprend une plate-forme de réglage horizontale (170) afin de maintenir la liaison qui forme le passage relié.

4. Passerelle pour passagers (100) selon la revendication 3, **caractérisée en ce que** la plate-forme de réglage horizontale (170) est disposée de manière à pouvoir être relevée et abaissée dans la première structure porteuse (150).

5. Passerelle pour passagers (100) selon l'une des revendications précédentes, **caractérisée en ce que** l'ouverture de passage (111) est disposée essentiellement perpendiculairement au segment proximal (131) des premiers segments (130).

6. Passerelle pour passagers (100) selon l'une des revendications précédentes, **caractérisée en ce que** la tête de passerelle (121) est disposée essentiellement perpendiculairement au segment distal (142) des seconds segments (140).

7. Passerelle pour passagers (100) selon l'une des revendications précédentes, **caractérisée en ce que** la tête de passerelle (121) comporte une cabine (122) qui peut pivoter dans le plan horizontal par rapport à un axe vertical passant par la tête de passerelle (121).

8. Passerelle pour passagers (100) selon l'une des revendications précédentes, **caractérisé en ce qu'**au moins l'un des premiers segments de passerelle (130) est relié à un autre des premiers segments de passerelle (130) par l'intermédiaire d'une première plate-forme de segment horizontale correspondante (135), chacune de ces premières plates-formes de segment horizontales (135) pouvant être relevée et abaissée dans la première structure de support (150), chaque premier segment de pont correspondant (130) étant relié de manière pivotante à chaque première plate-forme de segment horizontale correspondante (135), la liaison pivotante étant agencée de telle sorte que chaque première plate-forme de segment horizontale (135) soit maintenue horizontalement pendant que le premier segment de pont correspondant (130) est abaissé, relevé et/ou basculé.

9. Passerelle pour passagers (100) selon l'une des revendications précédentes, **caractérisée en ce qu'**au moins l'un des seconds segments de passerelle (140) est relié à un autre des seconds segments de passerelle (140) par l'intermédiaire d'une seconde plate-forme de segment horizontale correspondante (146), chacune de ces secondes plates-formes de segment horizontales (146) pouvant être levée et abaissée dans la première structure porteuse (150), chaque deuxième segment de pont correspondant (140) étant relié de manière pivotante à chaque deuxième plate-forme de segment horizontale correspondante (146), la liaison pivotante étant agencée de telle sorte que chaque deuxième plate-forme de segment horizontale (146) soit maintenue horizontalement pendant que le deuxième segment de pont correspondant (140) est abaissé, relevé et/ou basculé.

10. Passerelle pour passagers (100) selon l'une des revendications précédentes, **caractérisée en ce que** la tête de passerelle (121) est réglable verticalement entre une position la plus haute et une position la plus basse par basculement du premier (130) et/ou du deuxième (140) segment, et **en ce que** l'ouverture de passage pour passagers (111) est disposée verticalement entre la position la plus haute et la position la plus basse.

11. Passerelle pour passagers (100) selon l'une des revendications précédentes, **caractérisée en ce que** le premier segment proximal (131) est disposé horizontalement, **en ce que** la tête de passerelle (121) est réglable horizontalement entre une première et une deuxième position d'extrémité grâce à la structure télescopique et en ce ce déplacement horizontal peut s'effectuer horizontalement entre une extrémité proximale (132) et une extrémité distale (133) du premier segment proximal (131).

12. Passerelle pour passagers (100) selon l'une des revendications précédentes, **caractérisée en ce que** la tête de passerelle (121) est disposée au moins en partie, par exemple à au moins 50 %, à l'extérieur de la deuxième structure porteuse (160) dans le plan horizontal.

13. Passerelle pour passagers (100) selon l'une des revendications précédentes, **caractérisée en ce que** la tête de passerelle (121) est agencée de manière à pouvoir être allongée et raccourcie de manière télescopique dans le plan horizontal, le long de sa direction longitudinale.
